# EUROPEAN PATENT SPECIFICATION

(11) **EP 0 589 819 B1**
(45) Date of publication and mention of the grant of the patent: **24.02.1999**
(21) Application number: 93500107.3
(22) Date of filing: 16.07.1993
(51) Int. Cl.: A23L 1/325, A23D 9/00, A23L 1/314

(54) **Elver-like artificial food**
Jungaal ähnliches Artifizielles Nahrungsmittel
Aliment artificiel ressemblant à l'anguille

(30) Priority: 21.09.1992 JP 251123/92
(43) Date of publication of application: 30.03.1994
(73) Proprietor: NICHIREI CORPORATION, Tokyo 104 (JP); ANGULAS AGUINAGA, S.A., E-20270 Irura (Guipuzcoa) (ES)
(72) Inventor: Fukui, Keiichi, Furoraru Tagai 101, Kitakatsushika-gun, Saitama-ken (JP); Ishii, Hisao, Shinagawa-ku, Tokyo (JP)
(74) Representative: Carpintero Lopez, Francisco

(56) References cited:
- EP-A- 0 396 487
- WO-A-85/03621
- FR-A- 2 058 880
- FR-A- 2 377 161
- PATENT ABSTRACTS OF JAPAN vol. 009, no. 205 (C-0299)22 August 1985 & JP-A-60 075 259 (HAYASHIKANE SANGYO KK) 27 April 1985
- DATABASE WPI Week 7832, Derwent Publications Ltd., London, GB; AN 78-58022 & JP-A-53 023 388 (AJINOMOTO KK) 14 July 1978

## Description

This invention relates to an elver-like artificial food and, more particularly to an artificial food simulating a natural elver (Anguilla).

Heretofore, artificial food employing fish meat such as ground fish meat is extensively offered to the market. Examples of the artificial food include a processed food in the form of a crab leg meat. For producing the artificial food employing the fish meat or the like, starting materials such as ground fish meat, egg white, starch, water or seasoning, are grounded and/or cut and mixed together and the resulting mixture is extruded on a conveyor. After dyeing, cutting and heating the extruded mixture, cuts are formed on the product to produce fibrous feel and the resulting product is processed to simulate a natural food. An artificial food similar to the natural elver is also produced by a comparable method, as disclosed in Japanese Laid-Open Patent Application No. 3-247264. The artificial food is eaten as it is or after moderate heating.

Most of the artificial food produced by the conventional production process from fish meat is not heated excessively or its surface is coated with bread crumbs when it is to be heated strongly when eaten. Consequently, a phenomenon known as scorching, in which surface skin is swollen and hardened due to heating, as noticed with roasted fish paste, is not produced or if such scorching should be produced, it is hidden under the coating without raising particular inconveniences. For this reason, there lack up to now suitable measures against scorching. Meanwhile, elver-like artificial food is fried with oil without being previously coated with bread crumbs, scorching tends to be produced on its surface to deteriorate its appearance.

Patent EP-0 396 487 relates to a process for the manufacture of a product analogous to elver it been made by a main component such as the surimi which is comminuted and to which a series of ingredients are added as starch, water, egg white, vegetable oil, natural colouring, etc..., the vegetable oil up to 5% by weight being added, not describing that the added vegetable oil should be solid nor the advantages that may be obtained with the same.

Patent JP-A-60075259 discloses to add about 16 parts by weight of solid fat, requiring to use both the heat denatured fish meat without grinding with salt, and kneaded salt ground fish meat.

### SUMMARY OF THE INVENTION

It is therefore an object of the present invention to provide the above-mentioned elver-like artificial food which is free from scorching.

The above and other objects of the present invention will become apparent from the following description.

According to the present invention, there is provided an elver-like artificial food comprising 1 to 20 parts by weight of solid fat and solid oil to 100 parts by weight of a starting material containing fish and/or shellfish meat, said fish and/or shellfish meat consisting of fish and/or shellfish meat kneaded with salt.

### PREFERRED EMBODIMENTS OF THE INVENTION

The present invention will be explained hereinbelow in detail.

The fish meat, which is a main ingredient of the food according to the present invention, may include Alaska pollack, atka mackerel, brill, Guchi, horse mackerel, croaker, lizard fish, salmon, salmon trout, common scallop, short-necked clam and hard clam. Commercially available ground fish meat may also be employed.

If necessary, meat such as beef, pork, mutton, chicken, horse's meat or rabbit's meat; food solidified upon heating such as egg or plant protein; protein such as egg white, gelatine, fish extracts, meat extracts or plant protein; starches such as wheat starch, barley starch, soybean starch, corn starch or potato starch; and seasonings such as table salt, sodium glutamate, pepper, nutmeg or flavors, may be added to the above main ingredient as auxiliary ingredients. The ratio of the main ingredient to the auxiliary ingredient may be in a range of from 55 to 75 : 45 to 25 wt%.

The above-mentioned starting material may preferably be admixed with colorants for simulating the natural color of the elver. As these colorants, black-tinted colorants such as caramel pigments, polyphenol pigments or sepia pigments, are preferred.

According to the present invention, solid fat and oil are added to the starting material containing fish and/or shellfish meat. By adding solid fat and oil in the starting material for the elver-like food according to the present invention, it becomes possible to prevent scorching.

The solid fat and oil include hardened oils solid at ambient temperature, margarine and butter. The fact that scorching may be prevented by adding solid fat and oil to the starting material is surprising since the solid fat and oil exhibit scorching inhibiting effect more effectively than liquid oil at ambient temperature such as salad oil, and the ultimate product is more palatable than the product employing such liquid oil.

The amount of the solid fat and oil is 1 to 20 parts by weight to 100 parts by weight of the starting material. The amount of 1 part by weight of the solid fat and oil displays scorching inhibiting effects which become more pronounced with increase in the amount of the solid fat and oil. However, if the amount exceeds 20 parts by weight, the ultimate food becomes less palatable and lower in quality. The amount of the solid fat and oil is preferably 7 to 15 and more preferably on the order of about 13 parts by weight, depending on the amounts of other components in the starting material, in view of its scorching inhibiting effects and palatability.

The above-mentioned main ingredients and, if necessary, the auxiliary ingredients, are suitably combined together with solid fat and oil for producing an elver-like artificial food which is optionally admixed with a suitable amount of water and the resulting mixture is grounded and/or cut and mixed together. Such grinding and/or cutting and mixing give a paste-like mixed starting material exhibiting cetain tackiness. The mixed starting material may be extruded from a die having small orifices in the form of strings of the mixed starting material. These strings may be transported on a belt conveyor and cut by a cutter at a suitable angle. Although any suitable type of the cutter may be employed, a rotary cutter is most preferred because the starting material needs to be cross-cut at alternate angles, that is in alternately inclined directions with respect to the advancing direction on the belt conveyor, for forming heads and tails of the elver-like artificial food. The strings of the mixed starting material thus cut are heated by ordinary heating means, such as heater, steam, etc. There is no limitation to the heating temperature and heating time provided that shape retention properties of the mixed starting material may be assured. Usually, the heating temperature is on the order of 30 to 250°C and preferably 80 to 100°C, and the heating time is 10 to 90 seconds. The above-mentioned cutting process may be carried out before or after heating.

### EXAMPLES OF THE INVENTION

The present invention will be explained with reference to Examples and Comparative Examples.

### Example 1

60 kg of ground Alaska pollack meat, 1.8 kg of table salt, 4 kg of potato starch, 10 kg of egg white, 0.6 kg of fish meat extract and 30 kg of water were used as a starting material. 12 test groups of different amounts of addition of solid hardened oil, that is (i) a test group without addition of the hardened oil, (ii) a test group with addition of 1 part by weight of the hardened oil, (iii) a test group with addition of 3 parts by weight of the hardened oil, (iv) a test group with addition of 5 parts by weight of the hardened oil, (v) a test group with addition of 7 parts by weight of the hardened oil, (vi) a test group with addition of 9 parts by weight of the hardened oil, (vii) a test group with addition of 11 parts by weight of the hardened oil, (viii) a test group with addition of 13 parts by weight of the hardened oil, (ix) a test group with addition of 15 parts by weight of the hardened oil, (x) a test group with addition of 17 parts by weight of the hardened oil, (xi) a test group with addition of 20 parts by weight of the hardened oil and (xii) a test group with addition of 22 parts by weight of the hardened oil, to 100 parts by weight of the starting material, were provided in the starting material, and elver-like artificial food was produced in accordance with the following process.

First, ground Alaska pollack meat was charged into a silent cutter which was rotated at 1500 rpm for cutting and mixing. Table salt was then charged and kneaded and mixed for five minutes. The remaining components were then charged in their entirety and cut and mixed together for 20 minutes to give a starting material mixture.

The starting material mixture was molded and dyed to obtain an elver-like mixture which was heated with steam at a temperature of the heating atmosphere of 92° C and subsequently allowed to cool to give an ultimate product. The results are shown in Table 1. Part of the product was heated for 30 seconds with an amount of olive oil equivalent to the product heated to 170°C for evaluation. By way of evaluation, scorching inhibiting effects were evaluated by five expert panellers in accordance with the following stages.
- Score four:: No scorching was noticed.
- Score three:: Scorching was noticed partially and to a lesser extent.
- Score two:: Scorching was notices to a larger extent.
- Score one:: Sccorching similar to that in a roasted fish paste was noticed on the whole.

As to palatability, evaluation was made in accordance with the following five stages.
Score five: excellent; score four: good; score three: acceptable; score two: slightly unpalatable; score one: unpalatable.

**TABLE 1**

| Test Groups | Scorching Inhibitying Effect (score) | Palatability (score) |
|---|---|---|
| (1) Hardened Oil Not Added | 1 | 1 |
| (2) 1 Part by weight of Hardened Oil Added | 2 | 3 |
| (3) 3 Parts by weight of Hardened Oil Added | 3 | 3 |
| (4) 5 Parts by weight of Hardened Oil Added | 3 | 4 |
| (5) 7 Parts by weight of Hardened Oil Added | 4 | 4 |
| (6) 9 Parts by weight of Hardened Oil Added | 4 | 4 |
| (7) 11 Parts by weight of Hardened Oil Added | 4 | 4 |
| (8) 13 Parts by weight of Hardened Oil Added | 4 | 4 |
| (9) 15 Parts by weight of Hardened Oil Added | 4 | 4 |
| (10) 17 Parts by weight of Hardened Oil Added | 4 | 3 |
| (11) 20 Parts by weight of Hardened Oil Added | 4 | 2 |
| (12) 22 Parts by weight of Hardened Oil Added | 4 | 1 |

It is seen from Table 1 that, although scorching inhibiting effects may be noticed with the test group containing 1 part by weight of the hardened oil, no scorching may be noticed with the test groups containing 7 parts by weight or more of the hardened oil. As to palatability, addition of the hardened oil in excess of 20 parts by weight of the hardened oil is not desirable. It follows from these results that addition of 1 to 20 parts by weight and preferably 7 to 15 parts by weight of the hardened oil gives an elver-like artificial food with good palatability free of scorching in accordance with the present invention.

### Example 2

60 kg of ground Alaska pollack meat, 1.8 kg of table salt, 4 kg of potato starch, 10 kg of egg white, 0.6 kg of fish meat extract and 30 kg of water were used as the starting material. 12 test groups of different amounts of addition of butter, that is (i) a test group without addition of butter, (ii) a test group with addition of 1 part by weight of butter, (iii) a test group with addition of 3 parts by weight of butter, (iv) a test group with addition of 5 parts by weight of butter, (v) a test group with addition of 7 parts by weight of butter, (vi) a test group with addition of 9 parts by weight of butter, (vii) a test group with addition of 11 parts by weight of butter, (viii) a test group with addition of 13 parts by weight of butter, (ix) a test group with addition of 15 parts by weight of butter, (x) a test group with addition of 17 parts by weight of butter, (xi) a test group with addition of 20 parts by weight of butter and (xii) a test group with addition of 22 parts by weight of butter, to 100 parts by weight of the starting material, were provided in the starting material, and elver-like artificial food was produced by a method similar to that employed in Example 1.

Evaluation of the elver-like food was made in the same way as in Example 1. The results are shown in Table 2.

**TABLE 2**

| Test Groups | Scorching Inhibiting Effect (score) | Palatability (score) |
|---|---|---|
| (1) Butter Not Added | 1 | 1 |
| (2) 1 Part by weight of Butter Added | 2 | 2 |
| (3) 3 Parts by weight of Butter Added | 2 | 3 |
| (4) 5 Parts by weight of Butter Added | 3 | 4 |
| (5) 7 Parts by weight of Butter Added | 3 | 4 |
| (6) 9 Parts by weight of Butter Added | 4 | 4 |
| (7) 11 Parts by weight of Butter Added | 4 | 4 |
| (8) 13 Parts by weight of Butter Added | 4 | 4 |
| (9) 15 Parts by weight of Butter Added | 4 | 3 |
| (10) 17 Parts by weight of Butter Added | 4 | 2 |
| (11) 20 Parts by weight of Butter Added | 4 | 2 |
| (12) 22 Parts by weight of Butter Added | 4 | 1 |

It is seen from Table 2 that while scorching-inhibiting effects may be noticed in the test group containing 1 part by weight of butter, no scorching may be noticed in the test groups containing 9 parts by weight or more of butter. On the other hand, addition of 20 parts or more of butter is not desirable in respect of palatability. It follows from the above results that addition of 1 to 20 parts by weight and preferably 7 to 15 parts by weight of butter gives an elver-like artificial food free of scorching and with good palatability.

### Example 3

60 kg of ground Alaska pollack meat, 1.8 kg of table salt, 4 kg of potato starch, 10 kg of egg white, 0.6 kg of fish meat extract and 30 kg of water were used as the starting material. 12 test groups of different amounts of addition of margarine, that is (i) a test group without addition of margarine, (ii) a test group with addition of 1 part by weight of margarine, (iii) a test group with addition of 3 parts by weight of margarine, (iv) a test group with addition of 5 parts by weight of margarine, (v) a test group with addition of 7 parts by weight of margarine, (vi) a test group with addition of 9 parts by weight of margarine, (vii) a test group with addition of 11 parts by weight of margarine, (viii) a test group with addition of 13 parts by weight of margarine, (ix) a test group with addition of 15 parts by weight of margarine, (x) a test group with addition of 17 parts by weight of margarine, (xi) a test group with addition of 20 parts by weight of margarine and (xii) a test group with addition of 22 parts by weight of margarine, to 100 parts by weight of the starting material, were provided in the starting material, and elver-like artificial food was produced by a method similar to that employed in Example 1.

Evaluation of the elver-like artificial food was made in the same way as in Example 1. The results similar to those in Example 2 were obtained.

### Comparative Example 1

60 kg of ground Alaska pollack meat, 1.8 kg of table salt, 4 kg of potato starch, 10 kg of egg white, 0.6 kg of fish meat extract and 30 kg of water were used as the starting material. 12 test groups of different amounts of addition of salad oil, that is (i) a test group without addition of salad oil, (ii) a test group with addition of 1 part by weight of salad oil, (iii) a test group with addition of 3 parts by weight of salad oil, (iv) a test group with addition of 5 parts by weight of salad oil, (v) a test group with addition of 7 parts by weight of salad oil, (vi) a test group with addition of 9 parts by weight of salad oil, (vii) a test group with addition of 11 parts by weight of salad oil, (viii) a test group with addition of 13 parts by weight of salad oil, (ix) a test group with addition of 15 parts by weight of salad oil, (x) a test group with addition of 17 parts by weight of salad oil, (xi) a test group with addition of 20 parts by weight of salad oil and (xii) a test group with addition of 22 parts by weight of salad oil, to 100 parts by weight of the starting material, were provided in the starting material, and elver-like artificial food was produced by a method similar to that employed in Example 1.

Evaluation of the elver-like food was made in the same way as in Example 1. The results are shown in Table 3.

**TABLE 3**

| Test Groups | Scorching Inhibiting Effect (score) | Palatability (score) |
|---|---|---|
| (1) Salad Oil Not Added | 1 | 1 |
| (2) 1 Part by weight of Salad Oil Added | 1 | 2 |
| (3) 3 Parts by weight of Salad Oil Added | 1 | 3 |
| (4) 5 Parts by weight of Salad Oil Added | 1 | 3 |
| (5) 7 Parts by weight of Salad Oil Added | 1 | 3 |
| (6) 9 Parts by weight of Salad Oil Added | 1 | 2 |
| (7) 11 Parts by weight of Salad Oil Added | 2 | 2 |
| (8) 13 Parts by weight of Salad Oil Added | 2 | 2 |
| (9) 15 Parts by weight of Salad Oil Added | 2 | 1 |
| (10) 17 Parts by weight of Salad Oil Added | 3 | 1 |
| (11) 20 Parts by weight of Salad Oil Added | 3 | 1 |
| (12) 22 Parts by weight of Salad Oil Added | 3 | 1 |

Scorching was noticed partially to a lesser extent even with the test group containing 22 parts by weight of salad oil, while no effects on palatability such as those seen in Examples 1 to 3 were noticed, thus indicating that the products of the Comparative Example 1 were obviously inferior to those of the Examples 1 to 3.

With the elver-like artificial food containing solid hardened oil, margarine or butter, according to the present invention, it becomes possible to prevent scorching as well as to improve palatability.

## Claims

1. An elver-like artificial food comprising 1 to 20 parts by weight of solid fat and solid oil to 100 parts by weight of a starting material containing fish and/or shellfish meat, said fish and/or shellfish meat consisting of fish and/or shellfish meat kneaded with salt.

2. The artificial food according to claim 1, wherein said solid fat and solid oil is contained in an amount of 7 to 15 parts by weight to 100 parts by weight of said starting material.

3. The artificial food according to claim 1, wherein said solid fat and solid oil is selected from solid hardened oils, margarine, butter and mixtures thereof.

## Patentansprüche

1. Ein aus Ersatzstoffen hergestelltes glasaalähnliches Nahrungsmittelprodukt, das 1 bis 20 Gewichtsanteile festes Fett und Öl je 100 Gewichtsanteile Ausgangsmaterial enthält. Das Ausgangsmaterial enthält Fischfleisch und/oder Fleisch zweischaliger Weichtiere. Besagtes Fisch- und/oder Weichtierefleisch wird mit Salz zu einer Masse verknetet.

2. Das laut der Anforderung 1 aus Ersatzstoffen hergestellte Nahrungsmittelprodukt, bei dem besagtes festes Fett und Öl in einer Menge von 7 bis 15 Gewichtsanteilen je 100 Gewichtsanteile besagten Ausgangsmaterials enthalten sind.

3. Das laut der Anforderung 1 aus Ersatzstoffen hergestellte Nahrungsmittelprodukt, bei dem besagtes festes Fett und Öl unter wasserstoffhaltigen festen Ölen, Margarine, Butter und Mischungen derselben ausgewählt wird.

## Revendications

1. Un aliment artificiel ressemblant à la civelle qui contient 1 à 20 proportions en poids de graisse solide et d'huile solide pour 100 proportions en poids d'une matière de départ qui contient de la chair de poisson et/ou de mollusques bivalves, cette chair de poisson et/ou de mollusques bivalves consistant en de la chair de poisson et/ou de mollusques bivalves pétrie avec du sel.

2. L'aliment artificiel selon la revendication 1 où cette graisse solide et l'huile solide sont contenues dans la proportion de 7 à 15 proportions en poids pour 100 proportions en poids de cette matière de départ.

3. L'aliment artificiel selon la revendication 1, où cette graisse solide et l'huile solide sont sélectionnées parmi des huiles hydrogénées, de la margarine, du beurre et des mélanges de ces graisses.
